Europäisches Patentamt

European Patent Office

Office européen des brevets

(11) Veröffentlichungsnummer: **0 403 852**
**A2**

## EUROPÄISCHE PATENTANMELDUNG

(21) Anmeldenummer: **90110394.5**

(22) Anmeldetag: **31.05.90**

(51) Int. Cl.5: **F16B 12/44**

(30) Priorität: **22.06.89 DE 8907657 U**

(43) Veröffentlichungstag der Anmeldung:
**27.12.90 Patentblatt 90/52**

(84) Benannte Vertragsstaaten:
**AT BE CH DE FR GB IT LI NL**

(71) Anmelder: **Siemens Aktiengesellschaft**
**Wittelsbacherplatz 2**
**D-8000 München 2(DE)**

(72) Erfinder: **Dumps, Günter, Ing.**
**Leharstrasse 6 e**
**D-8900 Augsburg(DE)**

(54) **Eckverbinder für aus Profilrohren bestehende Gestelle.**

(57) Der Eckverbinder besteht aus einem Knoten mit drei senkrecht aufeinander stehenden, in die Profilrohre (1) ragenden Schenkeln (3,4), die nach innen zu konisch verjüngt (4) sind. Jedem Schenkel (3) ist ein über eine Schraube (5) verschiebbarer Konus (6) zugeordnet, und jeweils zwischen Schenkelende (4) und Konus (6) ist eine Spreizhülse (7) so angeordnet, daß sie beim Verschieben des Konus (6) in Richtung auf den Schenkel (3) zu gegen die Innenwand (8) des Profilrohres (1) gepreßt wird.

EP 0 403 852 A2

## Eckverbinder für aus Profilrohren bestehende Gestelle

Die Neuerung bezieht sich auf einen Eckverbinder zum Aufbauen von aus Profilrohren bestehenden Gestellen, mit einem Knoten aus drei senkrecht aufeinanderstehenden, in die Profilrohre ragenden Schenkeln. Eckverbinder dieser Art sind an sich in vielfältiger Weise bekannt. Die bekannten Eckverbinder haben jedoch eine Reihe von Nachteilen, wie z.B. zeitaufwendige Montage, die Notwendigkeit des Einsatzes von Hilfswerkzeugen zum Ausrichten der einzelnen Rahmenteile, komplizierte Formgebung oder das Sichtbarsein von Befestigungsteilen auf der Außenseite der Profilrohre. Beim Einsatz von Klebeverbindungen ist es ferner erforderlich, in den Ecken des Knotens zusätzlich Erdanschlüsse anzubringen, um die einzelnen Teile des Gestelles auf ein definiertes Erdpotential bringen zu können.

Der Neuerung lag daher die Aufgabe zugrunde, eine Eckverbindung für solche aus Profilrohren bestehende Gestelle zu schaffen, die die oben aufgezeigten Nachteile vermeiden.

Gemäß der Neuerung wird dies dadurch erreicht, daß bei einem Eckverbinder mit einem Knoten aus drei senkrecht aufeinanderstehenden, in die Profilrohre ragenden Schenkein die Schenkel nach innen zu konisch verjüngt sind, daß jedem Schenkel ein über eine Schraube verschiebbarer Konus zugeordnet ist und daß jeweils zwischen Schenkelende und Konus eine Spreizhüle so angeordnet ist, daß sie beim Verschieben des Konus in Richtung auf den Schenkel zu gegen die Innenwand des Profilrohres gepreßt wird.

Besonders vorteilhaft ist es, sowohl den Querschnitt der Schenkel als auch den Querschnitt der Konusse im wesentlichen dem Innenquerschnitt der Profilrohre entsprechend auszubilden. Bei einer derartigen Ausgestaltung der Querschnitte der Schenkel und der Konusse werden die Profilrohre vorzentriert und gegen Verdrehen gesichert. Die endgültige Zentrierung erfolgt dann dadurch, daß die mit Hilfe der Schraube verschiebbaren Konusse gegen die Schenkel zu gezogen werden und dabei die Spreizhülse gegen die Innenwand des jeweiligen Profilrohres pressen.

Weitere Einzelheiten der Neuerung ergeben sich aus den Schutzansprüchen sowie aus der nachstehenden Beschreibung eines vorteilhaften Ausführungsbeispieles.

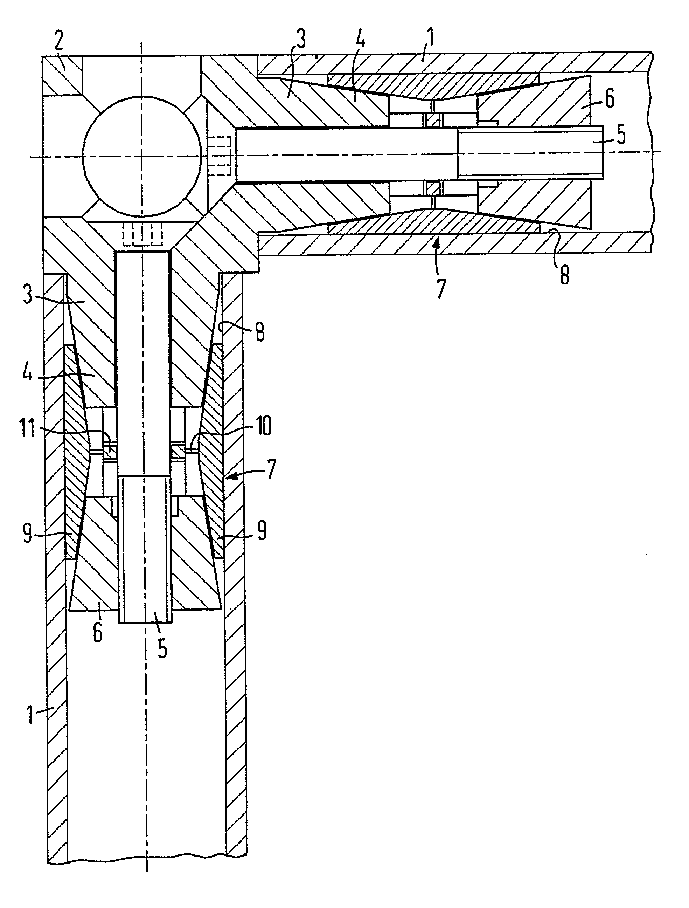

Das in der Zeichnung dargestellte Ausführungsbeispiel zeigt als Schnittdarstellung - einen neuerungsgemäßen Eckverbinder aus einem Knoten 2 mit drei senkrecht aufeinanderstehenden, in die Profilrohre 1 ragenden Schenkeln 3. Von den drei Schenkeln sind wegen der gewählten Schnittdarstellung nur zwei sichtbar. Die in die Profilrohre 1 ragenden Schenkel 3 sind an ihren Enden 4 nach innen zu konisch verjüngt. Sie bilden dadurch jeweils einen Konus. Ferner ist jedem der Schenkel 3 ein Konus 6 zugeordnet, der jeweils über eine Schraube 5 in Richtung auf das Ende 4 eines jeden Schenkels gezogen werden kann,. Zwischen Schenkelende 4 und Konus 6 ist jeweils eine Spreizhülse 7 so angeordnet, daß sie beim Bewegen des Konus 6 in Richtung auf den Schenkel 3 zu gegen die Innenwand 8 des Profilrohres 1 gepreßt wird.

Dazu besteht jede Spreizhülse 7 aus einer Mehrzahl von doppelt konischen Klemmkeilen 9, die über mindestens je einen Verbindungssteg 10 mit einem zu den Klemmkeilen 9 mittig angeordneten Führungsteil verbunden sind. Da in dem gezeigten Ausführungsbeispiel die Profilrohre aus Vierkantrohren bestehen, sind sowohl die Schenkel 3 des Knotens 2 als auch die Konusse 6 von rechteckigem Querschnitt, vorzugsweise mit leicht abgeschrägten Kanten zum leichteren Einführen der Teile in die Profilrohre. Außerdem besteht die Spreizhülse aus vier doppelt konischen Klemmkeilen und das Führungsteil 11 hat einen quadratischen Querschnitt mit einer mittig angeordneten Bohrung. Die Schraube 5 verläuft jeweils mittig durch den Schenkel 3, das Führungsteil 11 der Spreizhülse 7 und den Konus 6. Die Verbindungsstege 10 zwischen dem Führungsteil 11 und den doppelt konischen Klemmkeilen 9 haben zum einen die Aufgabe, die Klemmkeile 9 in einer festen Stellung zu dem Führungsteil 11 zu halten. Zum anderen dienen sie aber bei entsprechender Dimensionierung als Sollbruchstellen, die beim Pressen der Klemmteile 11 gegen die Profilrohrinnenwand 8 zerbrechen.

Aus dem dargestellten Ausführungsbeispiel ist leicht ersichtlich, daß der neuerungsgemäße Eckverbinder eine Reihe von Vorteilen gegenüber den bekannten Einrichtungen aufweist. So ist zu erkennen, daß sich der gesamte Verbindungsmechanismus zwischen Eckknoten und Profilrohr im Inneren des jeweiligen Profilrohres befindet. Nach außen hin treten lediglich im Knoten 2 des Eckverbinders die Bohrungen für die Schrauben 5 ,auf, die nach Montage des Gestelles leicht durch Füllstücke oder Gehäuseblenden verdeckt werden können. Außerdem ist ersichtlich, daß die Montage eines Gestelles aus Profilrohren mit solchen Eckverbindern in äußerst kurzer Zeit vorgenommen werden kann, da es lediglich erforderlich ist, nach dem Einführen der jeweils mit einem Konus und einer Spreizhülse versehenen Schenkel 3 die Schraube 5 anzuziehen. Weil dabei außerdem eine einwandfreie Zentrierung von Eckverbinder und Profilrohr stattfindet, sind keinerlei Hilfswerkzeuge erforderlich. Ferner ist es nicht erforderlich, zusätzliche Erdungsmaßnahmen vorzusehen, wie sie z.B. beim Verkleben von Eckknoten mit Profilrohren notwendig sind.

**Ansprüche**

1. Eckverbinder für aus Profilrohren bestehende Gestelle, mit einem Knoten aus drei senkrecht aufeinanderstehenden, in die Profilrohre ragenden Schenkeln, **dadurch gekennzeichnet,** daß die in die Profilrohre (1) ragenden Schenkel (3) nach innen zu konisch verjüngt (4) sind, daß jedem Schenkel (3) ein über eine Schraube (5) verschiebbarer Konus (6) zugeordnet ist und daß jeweils zwischen Schenkelende (4) und Konus (6) eine Spreizhülse (7) so angeordnet ist, daß sie beim Verschieben des Konus (6) in Richtung auf den Schenkel (3) zu gegen die Innenwand (8) des Profilrohres (1) gepreßt wird.

2. Eckverbinder nach Anspruch 1, **dadurch gekennzeichnet** , daß sowohl der Querschnitt der Schenkel (3,4) als auch der Querschnitt der Konusse (6) im wesentlichen dem Innenquerschnitt der Profilrohre entspricht.

3. Eckverbinder nach Anspruch 1,**dadurch gekennzeichnet** , daß jede Spreizhülse (7) aus einer Mehrzahl von doppelt konischen Klemmkeilen (9) besteht, die über mindestens je einen Verbindungssteg (10) mit einem zu den Klemmkeilen mittig angeordneten Führungsteil (11) verbunden sind.

4. Eckverbinder nach Anspruch 3, **dadurch gekennzeichnet** , daß die Verbindungsstege (10) so ausgebildet sind, daß sie eine Sollbruchstelle bilden, die beim Pressen der Klemmteile (11) gegen die Profilrohrinnenwände zerbricht.

5. Eckverbinder nach einem der Ansprüche 1 bis 4, **dadurch gekennzeichnet** , daß die Schrauben (5) jeweils mittig durch die Schenkel (3), die Führungsteile (11) der Spreizhülsen (7) und die Konusse (6) verlaufen.

6. Eckverbinder nach einem der Ansprüche 1 bis 5, dadurch gekennzeichnet , daß die Profilrohre aus Vierkantrohren bestehen.

7. Eckverbinder nach Anspruch 6, **dadurch gekennzeichnet** , daß die Schenkelenden (4) und die Konusse (6) als Vierkantkonusse mit leicht abgeschrägten Kanten ausgebildet sind.

8. Eckverbinder nach Anspruch 6 oder 7, **dadurch gekennzeichnet** , daß die Führungsteile (11) der Spreizhülsen (7) einen quadratischen Querschnitt mit einer mittig angeordneten Bohrung haben.

9. Eckverbinder nach Anspruch 8, **dadurch gekennzeichnet** , daß an jeder der vier Kanten des Führungsteils (11) zwei Verbindungsstege (10) zum Tragen jeweils eines Klemmkeils (9) angeordnet sind.